(19) **Europäisches Patentamt** / **European Patent Office** / **Office européen des brevets**

(11) **EP 3 798 606 A1**

(12) **EUROPEAN PATENT APPLICATION**

(43) Date of publication:
31.03.2021 Bulletin 2021/13

(51) Int Cl.:
*G01N 21/03* (2006.01)     *G01N 21/359* (2014.01)
*B01L 3/00* (2006.01)     *G01N 21/05* (2006.01)

(21) Application number: **19382834.0**

(22) Date of filing: **27.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Consejo Superior de Investigaciones Científicas (CSIC)**
**41013 Sevilla (ES)**

(72) Inventors:
• **GIL-ROSTRA, Jorge**
**41092 Sevilla (ES)**
• **RODRIGUEZ GONZÁLEZ-ELIPE, Agustín**
**41092 Sevilla (ES)**
• **YUBERO VALENCIA, Francisco**
**41092 Sevilla (ES)**
• **DENIZ, Ece**
**41092 Kadiloy (Istanbul) (TR)**

(74) Representative: **Pons**
**Glorieta Ruben Dario 4**
**28010 Madrid (ES)**

(54) **OPTOFLUIDIC DEVICE FOR MONITORING THE EVOLUTION OF LIQUID PRODUCTS BY NEAR-INFRARED SPECTROSCOPY**

(57) Optofluidic device for analyzing fluids comprising a near-infrared "NIR" light arrangement (8) to provide a light beam, a NIR detector (10) to receive it and to emit a signal (S1) associated with the characteristics of the light beam, an optofluidic cell (2) to house the fluid, variable in size, comprising an illumination window (3) to allow the light beam to pass through, a NIR mirror (4) to receive the light beam and to reflect light in a specific range of wavelengths, an actuator (14) to vary the distance between the illumination window (3) and the NIR mirror (4), an optical arrangement, comprising a first set of optical fibers (6), which connects the NIR light source (8) to the optofluidic cell, and a second set of optical fibers (7), which connects the optofluidic cell (2) to the NIR detector (10), a processing module (16), to analyze the signal (S1) emitted.

**FIG. 1**

EP 3 798 606 A1

# EP 3 798 606 A1

**Description**

## OBJECT OF THE INVENTION

The present invention is framed in the technological field of fluid analysis. Specifically, the invention is directed to the monitoring of liquid solutions or fluid streams by using optical means in the near-infrared region of the electromagnetic spectrum.

An object of the present invention is to provide an optofluidic device for carrying out an analysis of a liquid in a simple and cost-effective way.

A second object of the present invention is to provide an analysis method for analyzing fluids using the optofluidic device.

## BACKGROUND OF THE INVENTION

To improve quality, traceability and, in general, process control during liquid phase reactions, industry requires automatic, rapid, and cheap procedures to monitor their evolution. This is for example the case for wine production, in which the must of grapes converts to high value wines after a fermentation process. Production of beer, yogurt, milk, and other beverages are other examples.

For the particular case of alcoholic fermentation, several properties are commonly evaluated such as specific gravity, acidity, content of sugar, glycerol, tartaric acid, acetic acid, amount of total soluble solids, among others. Other visual, tasting or smelling evaluation analysis are also applied to asses final quality and main characteristics of wines. Most of these determinations are done after the wine has been produced.

On the other hand, the fermentation process in wine cellars or modern fermentation tanks is commonly followed ex-situ by local technicians using a pycnometer to determine the evolution of specific gravity. This simple test substitutes more complex, costly and slow chemical analysis procedures.

Unlike conventional chemical methods, near-infrared (NIR) spectroscopy is rapid, free from chemical reactants, non-destructive, and easy-to use (once calibrations have been performed). Besides, this technique fits very well with fluidic platforms to control processes without human surveillance.

Several solutions have been developed using NIR spectroscopy for the evaluation of fermentation process and liquid control in other processes. They operate either in transmission mode using a single optical path cuvette, in diffuse reflection mode or in the so-called transflectance mode.

In general, these and other standard apparatus used for NIR analysis of liquids use cuvettes with pre-establish fixed optical paths and optics without any tuning of their spectral response. Besides, the NIR optics and the cuvette are in general well separated, what makes necessary the use of some optical coupling system to illuminate and collect the reflected/transmitted light intensity after interaction with the liquid phase under study. This is also done to avoid possible degradation of the NIR optics when it is in contact with the solution under monitoring. Moreover, their optical monitoring often relies on expensive NIR monochromators.

A solution, proposed by the document US5717209A, relates to a system for remote real time NIR spectral analysis of hydrocarbons. Said document considers several probing heads sample cells, but wherein the optical path within the sample cells considered is fixed. Another solution proposed in US2014008539A describes a system for liquid NIR analysis with variable optical path, but said document does not allow real time evaluation of the characteristics of the liquid.

## DESCRIPTION OF THE INVENTION

The present invention is related to an optofluidic device intended for carrying out analysis of a fluid by using NIR spectroscopy. The device of the invention allows to obtain precise and reliable results in a cost-effective way.

The main technological sectors of application of the device of the invention are the analysis of agriculture liquids and food, but it might also find application in pharmaceutical, petrochemical (crudes, biofuel), food oils, water purification and similar sectors.

The device comprises a NIR light source and a NIR detector. Coupled one to another, such that the source emits a light beam which is directed to the fluid to be analyzed and, then, to the detector.

The light source is connected to the detector by means of an optical arrangement consisting of a plurality of optical fibers.

The liquid to be analyzed is injected to an optofluidic cell, where the light beam emitted by the source passes through said liquid. The optofluidic cell comprises an illumination window in front of a NIR mirror, defining a fluidic channel that the fluid has to fill to be analyzed. The distance between the illumination window and the NIR mirror defines the pathlength travelled by the light beam inside the cell.

2

The optofluidic cell could be configured to perform an analysis in real time of a fluid stream. Therefore, the fluidic cell could comprise an entrance and an exit for allowing the fluid stream to pass through the fluidic channel.

The fluidic channel is variable in size, and therefore, comprises an actuator intended for varying the distance between the illumination window and the dielectric mirror, and, thus, the pathlength travelled by the light beam inside the fluidic channel. More particularly, the distance between the illumination window and the NIR mirror is tunable in the range 50-3000 microns, with a tolerance of 10 microns.

Having this adjustable pathlength allows to increase the accuracy of the analysis in monitoring the presence and concentration of predetermined molecules or particles. This improvement is due to the fact that different molecules have different sensitivities to NIR radiation that can be enhanced by properly selecting the pathlength travelled by the light within the optofluidic cell. Therefore, the device of the invention allows to previously select the pathlength most appropriate to achieve a highest sensitiveness to certain molecule or particle included in the fluid stream.

The optofluidic cell is interrogated in a transflectance geometry, such that the light emitted by the NIR light source is directed to the optofluidic cell by means of the optical arrangement, in particular, using a first set of optical fibers, which connects the light source to the fluidic cell. Then, the light beam reaches the fluidic channel passing through the illumination window, and is projected to a NIR mirror to be reflect back, after passing twice through the fluid filling the fluidic channel. The dielectric mirror is optically designed to reflect just a specific region of the electromagnetic spectrum. The reflected light beam reaches again the illumination window, being collected by means of a second set of optical fibers, which are part of the optical arrangement. The second set of optical fibers directs the reflected NIR light beam to the NIR detector.

Upon exiting the illumination window, the reflected light beam reaches the NIR detector, by means of the optical fibers. Then, the detector emits an electric signal associated with the wavelength and intensity of the reflected light beam. The signal emitted is analyzed by using a processing module connected to the NIR detector. The processing module could analyze the signal by simple arithmetic relations among measured signals, using a multivariate analysis method or using neural networks algorithms.

In a preferred embodiment of the invention, the NIR light source could be a standard broadband NIR lamp coupled to a series of selected narrowband filters and a single NIR photodiode acting as NIR detector, which allows achieving high sensitiveness and reliability, in a cost-effective way. Alternatively, the series of narrowband filters and the NIR photodiode could be substituted by a compact NIR monochromator.

The optical arrangement of the invention could, preferably, be placed so that the second set of optical fibers, which connects the optofluidic cell to the NIR detector, is surrounded by the first set of optical fibers, which connects the NIR light source to the optofluidic cell, in the zone of connection of both sets of optical fibers to the optofluidic cell, by means of the illumination window.

Thus, the sets of optical fibers are of the bifurcated type, the first set starting from the NIR light source and the second set starting from the NIR detector, then both sets being attached forming a single bundle of optical fibers connected to the optofluidic cell.

More particularly, the second set of optical fibers could comprise a single optical fiber that in the connection to the optofluidic cell is surrounded by a plurality of optical fibers, which compose the first set of optical fibers.

The bifurcated configuration of the optical fibers allows to simplify the connection of the sets of optical fibers to the fluidic cell, having just one connection plug in the illumination window.

The NIR mirror is intended for reflecting light at certain wavelengths, thus allowing to reduce the influence of light having a wavelength out of a predetermined range, which could reduce the reliability or handicapped the procedure of analysis. Specifically, the NIR mirror is a Bragg mirror configured to have an optimized reflectivity in a specific region of the NIR wavelength range.

The surfaces of the illumination window of the Bragg mirror in contact with the fluid could be configured to be chemically resistant to minimized damages or fouling on analyzing a fluid chemically corrosive or oxidizing.

The Bragg mirror could be configured to have optimized reflectivity in the NIR wavelength range, as a periodic (LHL)^m multilayer, wherein L refers to low refractive index layers, H refers to high refractive index layers and m to the number of repetitions of an LHL trilayer structure.

Also, the fluidic cell could comprise in the entrance a macroparticle filter which avoid to introduce too big particles in the optofluidic cell, which could handicap the accuracy of the analysis.

The device of the invention could also comprise a plurality of optical filters located after the NIR source to reduce the negative influence over the results of light out of the desired range of wavelengths. The optical filters could be selected as narrow bandpass filters, and therefore, the light beam emitted to the fluidic cell could comprise a specific range of wavelengths.

The narrow bandpass filters could be based on Bragg microcavities multilayer architectures. Also, the narrow bandpass filters could be composed of multiple layers in a multilayered structure of the type (LHL)^3*D*(LHL)^3, where L and D refer to layers of materials with low refractive index layers and H to layers of materials with high refractive index. Their thicknesses and refractive indices will be selected to set the transmission peaks of the said microcavities to match a particular range of wavelengths.

More preferably, the device of the invention could comprise a tilting element configured to produce a wavelength red shift tuning in the transmission peaks of the narrowband pass filters, by tilting physically the filter. Therefore, the tilting element allows to tune the transmission peaks of the filter.

The device of the invention could also be configured to carry out an automatic cleaning process of the surfaces of the illumination window and the Bragg mirror in contact with the fluid stream, by comprising a surface cleaning set-up. The surface cleaning set-up comprises a cleaning tank, for containing a cleaning fluid, a waste tank, to receive used cleaning fluid, after being circulated inside the optofluidic cell and one or more valves, connected to the entrance and exit of the optofluidic cell so as to introduce the cleaning fluid from the cleaning tank to the optofluidic cell and recover the used cleaning fluid from the optofluidic cell to the waste tank. The surface cleaning set-up allows to perform a cleaning process of the surfaces of the illumination window and the Bragg mirror in contact to the fluid stream, when they are affected by the dirt that the fluid may introduce in the optofluidic cell.

Key features of this invention are the use of tunable pathlengths between this illumination window and the Bragg mirror within the fluidic channel, using a chemically robust NIR Bragg mirror within the optofluidic cell, thus improving the reliability of monitoring processes.

Besides, the use of specially designed NIR narrow bandpass filters consisting of tiltable Bragg microcavities combined with NIR photodiodes acting as NIR detectors instead of a NIR monochromator simplifies significantly the optical measurements and analysis, and reduces the costs of the apparatus.

Some solutions in the state of the art relates to a geometrical design intended to minimize the specular reflection, nevertheless, the device of the present invention carries out fluid monitoring based on maximizing specular reflection intensity.

Tight control of the fluid flow and temperature is required for enhanced reliability of the analysis.

The optofluidic device uses optical filters, fiber bundles, and NIR photodiode to provide a cost-effective and simple way of analyzing fluids, avoiding the need of using sophisticated and expensive NIR monochromators.

The fact that the device works in transflectance geometry allows to operate it with well-defined pathlengths within the optofluidic channel, that allows tuning to NIR overtone bands of specific functional groups of molecules present within the fluid, even if they are minority species within the solution.

It is also worth mentioning that as the optical elements required for the monitoring (i.e., NIR Bragg mirror and illumination window) are in close contact with the fluid within the cell, the required optical setup simplifies significantly, allowing optical analysis in transflectance geometry without needing complex focusing elements.

The fact of using specific tiltable NIR filters, tunable optical pathlength within the optofluidic channel, and optically optimized Bragg mirrors, and chemically resistant with antifouling properties and specific low surface energy material coatings for the surfaces of the illumination window and Bragg mirror in contact to the solution, warranties reliability and enhanced sensitivity of the monitoring processes.

A second object of the present invention is an analysis method for liquids which uses the optofluidic device according to the first aspect of the invention. The method comprises the step of providing the optofluidic device according to the first aspect of the invention.

Then, a reference liquid sample is flowed through the optofluidic cell, and a light beam is emitted sequentially passing through selected bandpass filters $F_i$.

Also, the absorbance $A_i$ is measured for each one of the filters $F_i$ selected. The pathlength is then adjusted within the optofluidic cell to optimize reflected signal at predefined wavelengths.

Sequentially, the absorbance $A\_ref\_i$ corresponding to each filter $F_i$ selected is measured, setting as zero-intensity $A\_ref\_z$ signal, one the signals obtained from the fluid with a filter, and setting as check-intensity $A\_ref\_c$ signal, another one of the signals obtained from the fluid with a filter.

Then, a normalization step is performed, wherein the measured $A\_ref\_i$ signals corresponding to the other filters are normalized, by using the zero-intensity $A\_ref\_z$ signal and the check-intensity $A\_ref\_c$ signal, thus, obtaining a set of normalized $An\_ref\_i$ intensities.

Later, the solution to be monitored is flowed, and measurements $A\_sol\_i(t)$ are recorded, setting as zero-intensity $A\_sol\_z(t)$ signal, one the signals obtained from the fluid with a filter, and setting as check-intensity $A\_sol\_c(t)$ signal, another one of the signals obtained from the fluid with a filter.

Then, another normalization step is performed, wherein the measured $A\_sol\_i$ signals corresponding to the other filters are normalized, by using the zero-intensity $A\_sol\_z(t)$ signal and the check-intensity $A\_sol\_c(t)$ signal, thus, obtaining a set of normalized $An\_sol\_i$ intensities.

Finally, the variations of the $An\_sol\_i(t)$ values of fluid samples are monitored.

Optionally, the analysis method for liquids could further comprise the step of cleaning the optofluidic cell with cleaning fluid, by using the surface cleaning set-up, thus, flowing the cleaning fluid inside the optofluidic cell from the cleaning tank to the waste tank, passing through one or more valves.

## DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- shows a scheme of a preferred embodiment of the optofluidic device of the invention.

Figure 2.- shows a scheme of a preferred embodiment of the NIR light source, including narrow bandpass filters.

Figure 3.- shows the correlation between the difference in absorbance collected at 1695 and 1660 nm by a NIR photodiode as a function of time (minutes), corresponding to a dynamic evaluation of ethanol/water mixtures.

Figure 4.- shows the correlation between the difference in absorbance collected at 1695 and 1660 nm by a NIR photodiode as a function of ethanol content (vol%), corresponding to a dynamic evaluation of ethanol/water mixtures.

Figure 5.- shows the correlation between the differences in absorbance collected at 1695 and 1660 nm and the ethanol content (vol%) of series of samples corresponding to an alcoholic fermentation process of a synthetic must.

Figure 6.- shows a preferred embodiment of the analysis method for liquids of the invention.

Figure 7.- shows a preferred embodiment of the measuring absorbance step.

## PREFERRED EMBODIMENT OF THE INVENTION

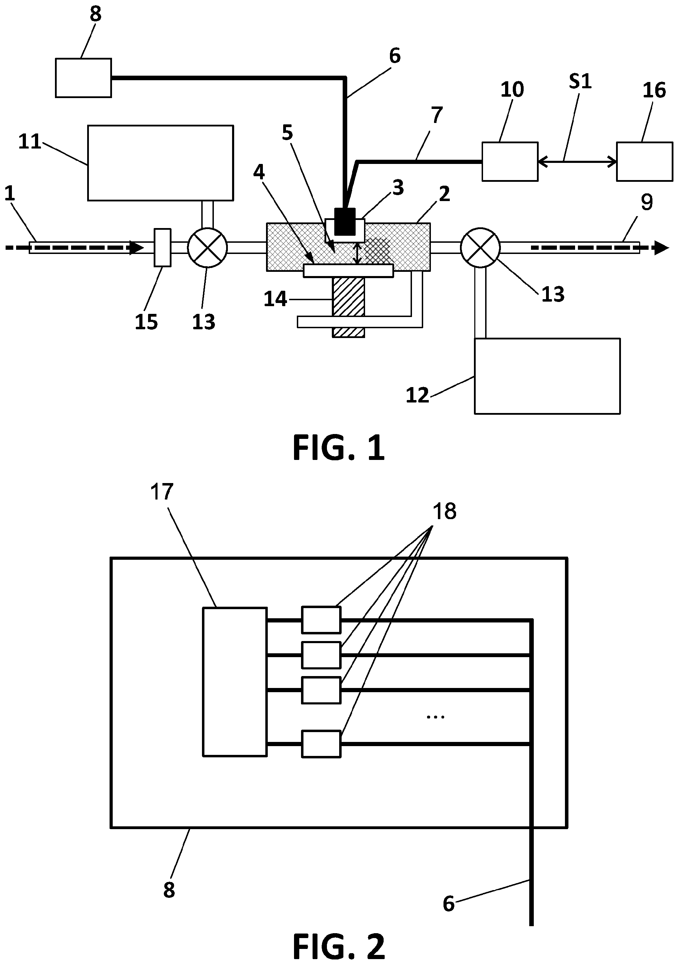

A preferred embodiment of the optofluidic device is shown in the scheme of Figure 1. The device of the invention comprises an optofluidic cell (2) with an entrance (1) and exit (9) for the liquid to flow, in order to carry out an analysis in real time of a stream of fluid. The flow within the optofluidic cell is constrained to pass through an optofluidic channel (5). The separation or pathlength, between the illumination window (3) and a Bragg mirror (4), wherein the illumination window (3) is placed facing the Bragg mirror (4), can be precisely tuned, and so, the size of the optofluidic channel (5).

The optofluidic cell (2) is irradiated with a light beam by means of a NIR light arrangement (8), in this case comprising a NIR lamp (17), wherein the light is driven by using an optical arrangement, comprising a bifurcated bundle of optical fibers, having a first set of optical fibers (6) comprising a plurality of illumination optical fibers from the light arrangement (8) to the illumination window (3), and a second set of optical fibers consisting on a measuring optical fiber (7), from the illumination window (3) to a NIR detector (10). The measuring optical fiber (7) being surrounded by the illumination optical fibers of the first set of optical fibers (6) in the connection to the illumination window (3).

The optical arrangement is set in a transflectance geometry, that means, the light travels from the illumination window (3) through the optofluidic channel (5) towards the Bragg mirror (4) consisting of a dielectric multilayer surface adapted to reflect light in the NIR range of wavelengths, then, the light is reflected back to the illumination window (3), and collected by using the measuring optical fiber (7), comprised in the optical arrangement. The reflected light collected by the measuring optical fiber (7) is directed to the NIR detector (10), in this case a NIR photodiode, which measures the intensity of said light collected.

The NIR detector (10) emits a signal (S1) associated to the intensity and wavelength of the light received. The emitted signal (S1) is sent to a processing module (16), connected to said NIR detector (10), and configured to analyze the signal (S1) received. Signal processing may rely on the evaluation of the light intensity collected by the optical set-up at the selected wavelengths regions, by means of either simple arithmetic relations among the collected signals, or on standard multivariate analysis methods or on complex artificial neural networks.

In a preferred embodiment, a reflection probe with a 6-around-1 fiber bundle design is chosen as the premium grade reflection probe QR600-7-VIS125BX from Ocean Optics Inc.

The entrance of the optofluidic cell (2) incorporates a macroparticle filter (15), so that the fluid entering in the optofluidic channel (5) is previously filtered to avoid the presence of undesired particles in the analysis.

Besides, the device can comprise a surface cleaning set-up for the surfaces of the optical elements in contact with the fluid streams of the optofluidic cell (2), comprising a cleaning tank (11) that contains a cleaning fluid, one or more valves (13) at the entrance and the exit of the optofluidic cell (2) and a waste tank (12) intended to recover the cleaning fluid after circulating through the optofluidic channel (5).

In a preferred embodiment, the illumination window (3) and the Bragg mirror (4) surfaces in contact with the fluid are coated with specific low surface energy material to minimized their fouling and therefore to increase operation lifetime between cleaning steps of the optofluidic cell (2).

The special configuration of the optofluidic cell (2) provides the capability of adjusting the pathlength of the optofluidic channel (5). This is achieved by varying the distance from the illumination window (3) to the Bragg mirror (4). An actuator (14) is provided to control this pathlength, more particularly, in this case, an adjustable micrometer positioner is used as actuator (14).

This feature allows very precise NIR optical analyses of the fluid on the optofluidic channel (5), specially, when dealing with aqueous solutions. Often, in aqueous solutions, the absorption bands of -OH functional groups from water molecules in liquid phase govern more than 98% of the total absorption of the solution in the NIR spectral range. The capability of tuning the pathlength travelled by the light beam within the liquid under study flowing through the optofluidic channel (5) allows enhancing specific signal from other absorption band characteristic of the species such as -CH, amide -NH or hydroxyl -OH groups linked to other molecules different from water in the aqueous solution, and, therefore, carrying out a more efficient analysis.

The Bragg mirror (4), located inside the optofluidic cell (2), is configured to reflect a specific broad band of the NIR electromagnetic spectrum and to be chemically resistant to the fluids to be monitored.

An exemplary embodiment of the NIR dielectric mirror (4) consists of a periodic (LHL)^m multilayer, where L and H refer to low refractive index and high refractive index layers with thicknesses in the range between few tens to few hundred nanometers and *m* the number of repetitions of the LHL trilayer structure.

Figure 2 shows a preferred embodiment of the NIR light arrangement (8) and the optical arrangement, comprising a NIR light source (17) and a plurality of narrow bandpass filters (18). Then, light emitted by the NIR source (17) passes through each narrow bandpass filters (18) and is collected by the branches of a suitable bifurcated first set of optical fibers (6), so as to guide light in a specific band of the NIR spectrum on each optical fiber.

The narrow bandpass filters (18) may be based on Bragg microcavities with narrow transmission bands (about 10-30 nm full with half maximum) in the 1200-1850 nm wavelength range. The precise position and width of these transmission bands are selected according to the characteristic NIR absorptions of the molecular species in the solution to be monitored.

An exemplary embodiment for these filters (18) consists of multilayer structures (LHL)^3*D*(LHL)^3 where L and D refer to low refractive index layers (i.e., silicon dioxide), and H to high refractive index layers (i.e., silicon), respectively, all of them transparent to the NIR electromagnetic region. Their thicknesses are in the range between few tens to few hundred nm. The superscript 3 refers to the number of repetitions of the LHL trilayer structure.

These filters (18) typically red-shift the wavelength of the transmission band few nanometers when tilting them few degrees off normal incidence. This property allows to achieve a fine tuning of the selected wavelength of analysis and to get multiple wavelengths of analysis with a single filter, by tilting each filter. Accordingly, a tilting element is configured to tilt each filter to tune the transmission peaks.

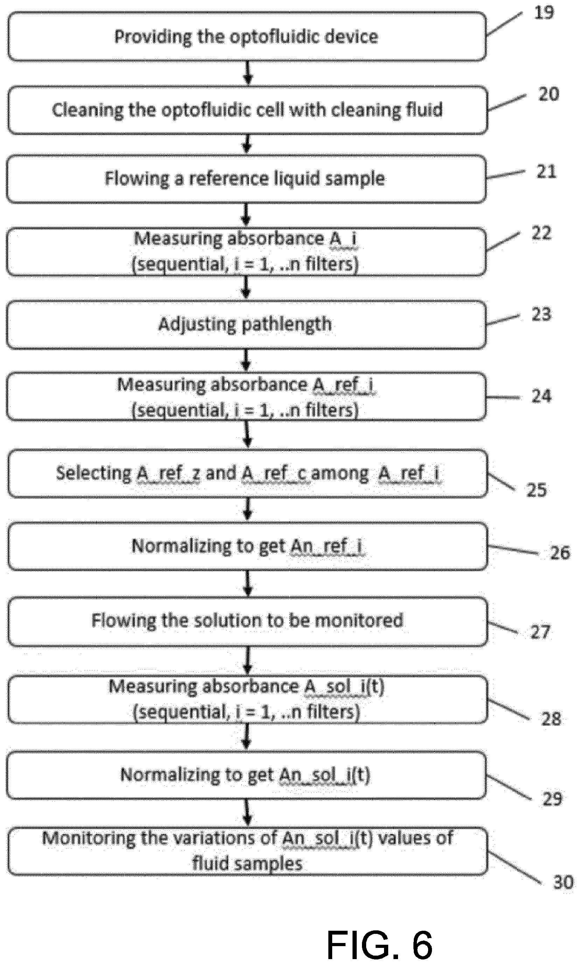

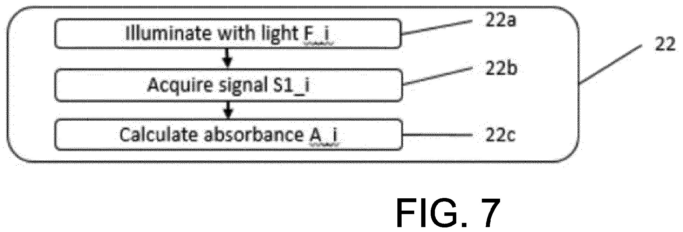

Figure 6 and Figure 7 show a preferred embodiment of the analysis method for liquids of the invention. The method comprising the step of providing (19) the optofluidic device of the invention, specifically, a NIR light arrangement (8), comprising a NIR light source (17) and a plurality of narrow bandpass filters (18), an optical arrangement of optical fibers (6, 7), an optofluidic cell (2), and a NIR detector (10).

Then, cleaning (20) the optofluidic cell (2) with cleaning fluid, by using the surface cleaning set-up. The valve (13) of the entrance of the fluidic cell (2) allows to entry the cleaning fluid from the cleaning tank (11), the cleaning fluid passes through the optofluidic cell (2), and then the valve (13') of the exit of the optofluidic cell (2) drives the used cleaning fluid to the waste tank (12).

Next, a reference liquid sample is flowed (21) through the optofluidic cell (2). For example, distilled water is a good reference to monitor the evolution of aqueous solutions. Then, sequentially a light beam is emitted (22a) and guided passing through F_i selected bandpass filters (18), through the illumination window (3), through the reference liquid sample, reflected back from the Bragg mirror (4) to the illumination window (3) again, the light collected by the measuring optical fibers of the second set of optical fibers (7) and guided to the NIR detector (10), acquiring a signal S1_i (22b) from which the absorbance A_i (22c) corresponding to the wavelength range selected by each filter (18).

Then, adjusting (23) the pathlength within the optofluidic channel (5) is performed to optimize reflected signal at selected wavelengths corresponding to the NIR absorption of the specific functional groups to be monitored. Thus, after this last adjustment, the final absorbance of the reference sample A_ref_i is measured (24).

Among the signals obtained with the reference liquid with each Fi filter (18), one is set (25) as zero-intensity A_ref_z and another one is set (25) as check-intensity A_ref_c.

Regarding the procedure for data treatment, it is convenient to define a normalization process (26) of the measured A_ref_i signals, to obtain a set of normalized An_ref_i intensities. A possible normalization relationship might be:

$$An\_ref\_i = ( A\_ref\_i - A\_ref\_z ) / ( A\_ref\_c - A\_ref\_z )$$

After the reference liquid has been analyzed at the selected wavelength ranges selected by the filters considered, the solution to be monitored is flowed (27), recording (28) as many measurements A_sol_i(t) as needed, following the same protocol described above, to monitor the temporal evolution of the solution under study. In this case t refers to the particular time at which the set of measurements has been performed

Following the same normalization (29) procedure mentioned above, a set of normalized An_sol_i(t) intensities will be evaluated according to the formula:

$$An\_sol\_i(t) = (A\_sol\_i(t) - A\_sol\_z(t)) / (A\_sol\_c(t) - A\_sol\_z(t))$$

The evolution of the set of normalized signals An_sol_i(t) will characterize the changes of the fluid under analysis as the composition of the fluid within the optofluidic cell changes. The set of An_sol_i(t) values from each sample (different samples measured at different times t) will be interpreted (30) by comparison with other previously studied reference solutions.

Preferably, at different moments of the monitoring process (30), a step is performed consisting of flowing the reference liquid through the optofluidic cell and measuring their normalized absorbance An_ref_i (26). The purpose of this step is to control and inform about the consistency and robustness of the analysis. If deviations from original An_ref_i values (26) are obtained, the cleaning liquid is flowed (20) to clean surfaces in contact with the liquid stream of the illumination window (3) and the Bragg mirror (4) within the optofluidic cell (2).

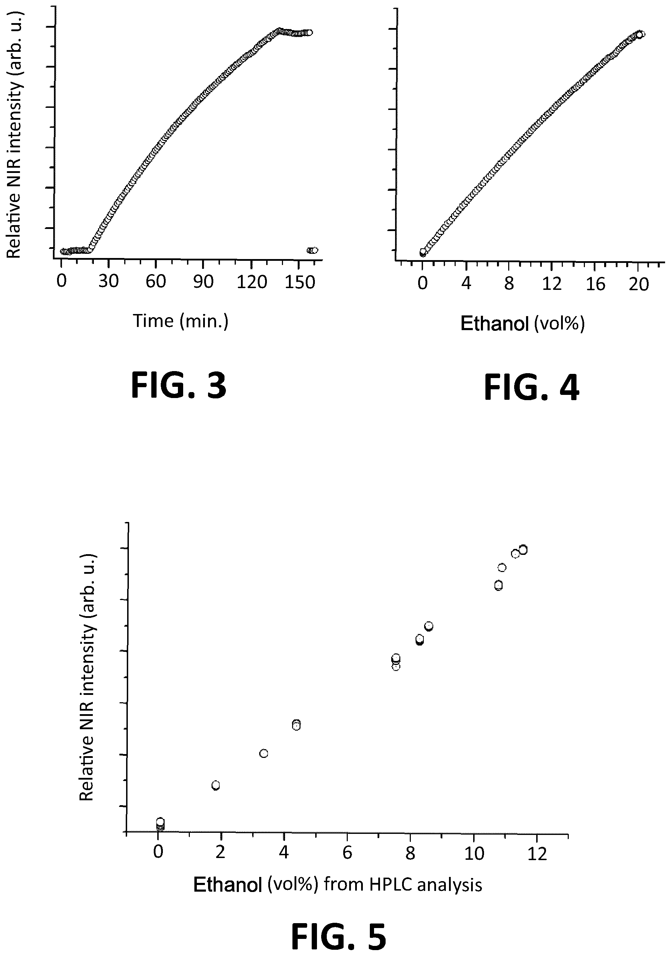

Figures 3 and 4 show the correlation between the differences in absorbance collected at 1695 and 1660 nm corresponding to a dynamic evaluation of ethanol/water mixtures. In particular, Figure 3 shows the relative intensity evaluated as a function of time and Figure 4 the relative intensity evaluated as a function of ethanol content in the solution.

In this case, a slowly varying ethanol/water solution, is set to flow through a optofluidic cell (2), which starts with 40 ml pure water, increasing 20 ml ethanol-40% water solution per hour during two hours, to end with an ethanol-20% water solution. Also, the narrow bandpass filters (7) F_1, F_2, F_3, and F_4 are selected at central wavelength of 1300, 1660, 1695 and 1830 nm, respectively having full width at half maximum of 10 nm. The Bragg mirror (4) has an optimized reflectivity between 1280 nm and 1850 nm. Also, a bundle of 6+1 bifurcated optical fibers (6, 7), a central fiber and 6 external fibers located around this, is used for driving the light beam inside, external fibers, and outside, central fiber, from the optofluidic cell.

The NIR arrangement (8) is common to all the external fibers of the first set of optical fibers (6). The wavelength of each external optical fiber is selected by using each of the bandpass filters (18) situated at the entrance of each optical fiber.

The illumination of the optofluidic cell (2) from the illumination window (3) is made in a sequential way. A switch system selects each one of the external fibers, one by one. Light intensities collected from the central measuring fiber (7) corresponding to the reflection from the Bragg mirror (4) within the optofluidic cell (2) are recorded from the NIR detector (10) output.

The light collection is performed during approximately 1 second for each fiber, so the system gets a full analysis every 6 seconds.

Among the collected signals A_1(t), A_2(t), A_3(t), and A_4(t), using each bandpass filter, two of them are used for normalization purposes. In this case, those signals corresponding to the filter F_1 with band pass at 1300 nm, A_1(t), and to the filter F_4 at 1830 nm A_4(t), were considered as zero_intensity A_z(t), and check_intensity A_c(t), respectively.

Signal normalization from each filter F_2 and F_3 consists of applying the formulas:

$$An\_2(t) = (A\_2(t) - A\_z(t)) / (A\_c(t) - A\_z(t))$$

$$An\_3(t) = (A\_3(t) - A\_z(t)) / (A\_c(t) - A\_z(t))$$

respectively. Thus, the evolution water/ethanol mixtures were monitored following the variation of the difference between the normalized signals acquired with F_3 and F_2 filters, i.e., following $\triangle An(t) = An\_3(t) - An\_2(t)$,

Figure 5 shows the correlation between the differences in absorbance collected at 1695 and 1660 nm and the ethanol content (% vol) of series of samples corresponding to an alcoholic fermentation process of a synthetic must. In this figure, reference ethanol content of the synthetic must samples was evaluated separately by high-performance liquid chromatography (HPLC) analysis.

When describing some embodiments of the current invention, specific terminology is employed for the sake of clarity, although the invention is not intended to be limited to the specific terminology so selected. A person skilled in the relevant art will recognize that other equivalent components can be employed and other methods developed without departing from the spirit and scope of the invention.

**Claims**

1. Optofluidic device for analyzing fluids **characterized in that** comprises:

   - a near-infrared (NIR) light arrangement (8), intended to provide a light beam,
   - a NIR detector (10), arranged to receive the light beam and configured to emit a signal (S1) associated with the wavelength and intensity of the received light beam,
   - an optofluidic cell (2), intended to house the fluid to be analyzed, being variable in size and comprising:

      - an illumination window (3), intended to receive the light beam and allow said light beam to pass through,
      - a NIR mirror (4), arranged to receive the light beam, which has passed though the illumination window (3), and configured to reflect light in a specific range of wavelengths,
      - an actuator (14), intended to vary the distance between the illumination window (3) and the NIR mirror (4),

   - an optical arrangement, comprising a first set of optical fibers (6), which connects the NIR light source to the optofluidic cell, and a second set of optical fibers (7), which connects the optofluidic cell to the NIR detector,
   - a processing module (16), connected to the NIR detector (10) and configured to analyze the signal (S1) emitted by said NIR detector (10).

2. Optofluidic device according to claim 1, wherein the first set of optical fibers (6) of the optical arrangement, is surrounding the second set of optical fibers (7) on the connection to the illumination window (3), thus using bifurcated optical fibers.

3. Optofluidic device according to claim 1, wherein the NIR mirror (4) is a Bragg mirror surface.

4. Optofluidic device according to claim 1, wherein the Bragg mirror (4) is configured to have optimized reflectivity in the NIR wavelength range as a periodic (LHL)^m multilayer, wherein L and H refer to low refractive index and high refractive index layers and *m* to the number of repetitions of a LHL trilayer structure.

5. Optofluidic device according to claim 1, wherein the NIR light arrangement (8) comprises a NIR light source (17) and one or more narrow bandpass filters (18).

6. Optofluidic device according to claim 5, wherein the narrow bandpass filters (18) are Bragg microcavities with transmission peaks matching particular range of wavelengths in the NIR.

7. Optofluidic device according to claim 5, wherein the narrow bandpass filters (18) are multilayer structures (LHL)^3*D*(LHL)^3 where L and D refer to low refractive index layers and H to high refractive index layers.

8. Optofluidic device according to claim 6, further comprising a tilting element configured to produce a wavelength red shift tuning in the transmission peaks of the narrow bandpass filters, by tilting physically said filters.

9. Optofluidic device according to claim 1, wherein the analysis of fluids is carried out in real time, the optofluidic cell (2) further comprising an entrance (1) and an exit (9) for allowing a stream of liquid to flow inside.

10. Optofluidic device according to claim 1, wherein the entrance (1) of the optofluidic cell (2) further comprises a macroparticle filter (15).

11. Optofluidic device according to claim 1, further comprising a surface cleaning set-up comprising:

    - a cleaning tank (11), containing a cleaning fluid,

- a waste tank (12), intended to receive used cleaning fluid,
- one or more valves (13), connected to the entrance (1) and exit (9) of the optofluidic cell (2) so as to introduce the cleaning fluid from the cleaning tank (11) to the optofluidic cell (2), and recover the used cleaning fluid from the optofluidic cell (2) to the waste tank (12).

12. Optofluidic device according to claim 1, wherein the inner surfaces of the optofluidic cell (2) are coated with specific low surface energy material.

13. Optofluidic device according to claim 1, wherein the processing module (16) uses simple arithmetic, multivariate analysis methods or neural network algorithms to analyze the signals (S1) emitted by the NIR detector (10).

14. Analysis method for liquids which uses the optofluidic device according to any of claims 1-13, and **characterized in** comprising the steps of:

- providing the optofluidic device according to claims 1-13,
- flowing a reference liquid sample through the optofluidic cell (2),
- emitting sequentially a light beam passing through selected bandpass filters $F\_i$ (18),
- measuring the absorbance $A\_i$ corresponding to each filter $F\_i$ (18) selected,
- adjusting the pathlength within the optofluidic cell (5) to optimize reflected signal at predefined wavelengths,
- measuring the absorbance $A\_ref\_i$ corresponding to each filter $F\_i$ (18) selected,
- setting as zero-intensity $A\_ref\_z$ signal, one the signals obtained from the fluid with a filter (18),
- setting as check-intensity $A\_ref\_c$ signal, one the signals obtained from the fluid with a filter (18),
- normalizing the measured $A\_ref\_i$ signals corresponding to the other filters (18), by using the zero-intensity $A\_ref\_z$ signal and the check-intensity $A\_ref\_c$ signal, to obtain a set of normalized $An\_ref\_i$ intensities,
- flowing the solution to be monitored,
- recording measurements $A\_sol\_i(t)$,
- setting as zero-intensity $A\_sol\_z(t)$ signal, one the signals obtained from the fluid with a filter (18),
- settting as check-intensity $A\_sol\_c(t)$ signal, one the signals obtained from the fluid with a filter (18),
- normalizing the measured $A\_sol\_i$ signals corresponding to the other filters (18), by using the zero-intensity $A\_sol\_z(t)$ signal and the check-intensity $A\_sol\_c(t)$ signal, to obtain a set of normalized $An\_sol\_i$ intensities,
- monitoring the variations of the $An\_sol\_i(t)$ values of fluid samples.

15. Analysis method for liquids according to claim 14, further comprising the step of cleaning the optofluidic cell (2) with cleaning fluid, by using the surface cleaning set-up, thus, flowing the cleaning fluid inside the optofluidic cell (2) from the cleaning tank (11) to the waste tank (12), passing through the valves (13).

FIG. 1

FIG. 2

**FIG. 3**

**FIG. 4**

**FIG. 5**

Providing the optofluidic device — 19

↓

Cleaning the optofluidic cell with cleaning fluid — 20

↓

Flowing a reference liquid sample — 21

↓

Measuring absorbance A_i
(sequential, i = 1, ..n filters) — 22

↓

Adjusting pathlength — 23

↓

Measuring absorbance A_ref_i
(sequential, i = 1, ..n filters) — 24

↓

Selecting A_ref_z and A_ref_c among A_ref_i — 25

↓

Normalizing to get An_ref_i — 26

↓

Flowing the solution to be monitored — 27

↓

Measuring absorbance A_sol_i(t)
(sequential, i = 1, ..n filters) — 28

↓

Normalizing to get An_sol_i(t) — 29

↓

Monitoring the variations of An_sol_i(t) values of
fluid samples — 30

# FIG. 6

FIG. 7

EP 3 798 606 A1

Europäisches
Patentamt

European
Patent Office

Office européen
des brevets

**EUROPEAN SEARCH REPORT**

Application Number

EP 19 38 2834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2004 035623 A1 (BETR FORSCH INST ANGEW FORSCH [DE]) 16 February 2006 (2006-02-16) | 1,9 | INV.<br>G01N21/03<br>G01N21/359<br>B01L3/00 |
| Y | * paragraph [0003] - paragraph [0022] *<br>* figures 1, 2 * | 2,13 | |
| X | US 5 168 367 A (O'ROURKE PATRICK E [US] ET AL) 1 December 1992 (1992-12-01) | 1,9 | ADD.<br>G01N21/05 |
| Y | * figures 1, 2 *<br>* column 1, line 52 - column 3, line 62 * | 2,13 | |
| X | US 5 039 224 A (O'ROURKE PATRICK E [US] ET AL) 13 August 1991 (1991-08-13) | 1,9 | |
| Y | * abstract *<br>* figures 1-3 *<br>* column 1, line 18 - column 5, line 14 * | 2,13 | |
| Y | US 2019/104942 A1 (PERU DEBORAH ANN [US] ET AL) 11 April 2019 (2019-04-11)<br>* figure 2 *<br>* paragraph [0033] - paragraph [0034] * | 2 | |
| Y | VÍCTOR ABEL CORRO-HERRERA ET AL: "Real-time monitoring of ethanol production during Pichia stipitis NRRL Y-7124 alcoholic fermentation using transflection near infrared spectroscopy", ENGINEERING IN LIFE SCIENCES, vol. 18, no. 9, 19 June 2018 (2018-06-19), pages 643-653, XP055670843, DE<br>ISSN: 1618-0240, DOI: 10.1002/elsc.201700189<br>* abstract * | 13 | |

TECHNICAL FIELDS SEARCHED (IPC)

G01N
B01L

The present search report has been drawn up for all claims

| Place of search | Date of completion of the search | Examiner |
|---|---|---|
| Munich | 21 February 2020 | Sauerer, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 9, 13

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1, 2, 9, 13

   Optofluidic device for analyzing fluids comprising:
   - a near-infrared (NIR) light arrangement, intended to provide a light beam,
   - a NIR detector, arranged to receive the light beam and configured to emit a signal associated with the wavelength and intensity of the received light beam,
   - an optofluidic cell, intended to house the fluid to be analyzed, being variable in size and comprising:
   - an illumination window, intended to receive the light beam and allow said light beam to pass through,
   - a NIR mirror, arranged to receive the light beam, which has passed though the illumination window, and configured to reflect light in a specific range of wavelengths,
   - an actuator, intended to vary the distance between the illumination window (3) and the NIR mirror,
   - an optical arrangement, comprising a first set of optical fibers, which connects the NIR light source to the optofluidic cell, and a second set of optical fibers, which connects the optofluidic cell to the NIR detector,
   - a processing module, connected to the NIR detector and configured to analyze the signal emitted by said NIR detector,
   wherein the first set of optical fibers of the optical arrangement, is surrounding the second set of optical fibers on the connection to the illumination window, thus using bifurcated optical fibers.
   ---

2. claims: 3-8

   Optofluidic device for analyzing fluids comprising:
   - a near-infrared (NIR) light arrangement, intended to provide a light beam,
   - a NIR detector, arranged to receive the light beam and configured to emit a signal associated with the wavelength and intensity of the received light beam,
   - an optofluidic cell, intended to house the fluid to be analyzed, being variable in size and comprising:
   - an illumination window, intended to receive the light beam and allow said light beam to pass through,
   - a NIR mirror, arranged to receive the light beam, which has passed though the illumination window, and configured to reflect light in a specific range of wavelengths,
   - an actuator, intended to vary the distance between the illumination window (3) and the NIR mirror,
   - an optical arrangement, comprising a first set of optical fibers, which connects the NIR light source to the optofluidic cell, and a second set of optical fibers, which connects the optofluidic cell to the NIR detector,

Europäisches
Patentamt

European
Patent Office

Office européen
des brevets

**LACK OF UNITY OF INVENTION
SHEET B**

Application Number

EP 19 38 2834

The Search Division considers that the present European patent application does not comply with the
requirements of unity of invention and relates to several inventions or groups of inventions, namely:

- a processing module, connected to the NIR detector and
configured to analyze the signal emitted by said NIR
detector,
wherein particular details of NIR mirror and NIR light
source are specified.
---

3. claims: 10-12, 15

Optofluidic device for analyzing fluids comprising:
- a near-infrared (NIR) light arrangement, intended to
provide a light beam,
- a NIR detector, arranged to receive the light beam and
configured to emit a signal associated with the wavelength
and intensity of the received light beam,
- an optofluidic cell, intended to house the fluid to be
analyzed, being variable in size and comprising:
- an illumination window, intended to receive the light beam
and allow said light beam to pass through,
- a NIR mirror, arranged to receive the light beam, which
has passed though the illumination window, and configured to
reflect light in a specific range of wavelengths,
- an actuator, intended to vary the distance between the
illumination window (3) and the NIR mirror,
- an optical arrangement, comprising a first set of optical
fibers, which connects the NIR light source to the
optofluidic cell, and a second set of optical fibers, which
connects the optofluidic cell to the NIR detector,
- a processing module, connected to the NIR detector and
configured to analyze the signal emitted by said NIR
detector,
wherein particular features for avoiding contamination of
optical surfaces are specified.
---

4. claim: 14

Analysis method for liquids which uses the optofluidic
device according to claim 1, and comprising the steps of:
- providing the optofluidic device according to claim 1,
- flowing a reference liquid sample through the optofluidic
cell,
- emitting sequentially a light beam passing through
selected bandpass filters $F\_i$,
- measuring the absorbance $\overline{A}\_i$ corresponding to each filter
$F\_i$ selected,
- adjusting the pathlength within the optofluidic cell to
optimize reflected signal at predefined wavelengths,
- measuring the absorbance $A\_ref\_i$ corresponding to each
filter $F\_i$ selected,
- setting as zero-intensity $A\_ref\_z$ signal, one the signals

Europäisches
Patentamt

European
Patent Office

Office européen
des brevets

**LACK OF UNITY OF INVENTION
SHEET B**

Application Number

EP 19 38 2834

The Search Division considers that the present European patent application does not comply with the
requirements of unity of invention and relates to several inventions or groups of inventions, namely:

```
obtained from the fluid with a filter,
- setting as check-intensity A_ref_c signal, one the signals
obtained from the fluid with a filter,
- normalizing the measured A_ref_i signals corresponding to
the other filters, by using the zero-intensity A_ref_z
signal and the check- intensity A_ref_c signal, to obtain a
set of normalized An_ref_i intensities,
- flowing the solution to be monitored,
- recording measurements A_sol_i(t),
- setting as zero-intensity A_sol_z(t) signal, one the
signals obtained from the fluid with a filter,
- settting as check-intensity A_sol_c(t) signal, one the
signals obtained from the fluid with a filter,
- normalizing the measured A_sol_i signals corresponding to
the other filters, by using the zero-intensity A_sol_z(t)
signal and the check-intensity A_sol_c(t) signal, to obtain
a set of normalized An_sol_i intensities,
- monitoring the variations of the An_sol_i(t) values of
fluid samples.
                    ---
```

page 3 of 3

**ANNEX TO THE EUROPEAN SEARCH REPORT
ON EUROPEAN PATENT APPLICATION NO.**

EP 19 38 2834

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2020

| Patent document cited in search report | Publication date | Patent family member(s) | | Publication date |
|---|---|---|---|---|
| DE 102004035623 A1 | 16-02-2006 | NONE | | |
| US 5168367 A | 01-12-1992 | NONE | | |
| US 5039224 A | 13-08-1991 | NONE | | |
| US 2019104942 A1 | 11-04-2019 | AU | 2018348119 A1 | 09-04-2020 |
| | | CN | 111133285 A | 08-05-2020 |
| | | EP | 3673248 A1 | 01-07-2020 |
| | | US | 2019104942 A1 | 11-04-2019 |
| | | WO | 2019075005 A1 | 18-04-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5717209 A
- US 2014008539 A